# EUROPEAN PATENT APPLICATION

(11) **EP 4 769 764 A1**
(43) Date of publication of application: **01.07.2026**
(21) Application number: 25848557.2
(22) Date of filing: 24.07.2025
(51) Int. Cl.: H01M 50/367, H01M 50/383, H01M 50/271, H01M 50/342, H01M 50/375, H01M 50/317

(54) **BATTERY PACK AND VEHICLE INCLUDING SAME**

(30) Priority: 31.07.2024 KR 20240101817; 10.09.2024 KR 20240123076
(71) Applicant: LG ENERGY SOLUTION, LTD., Seoul 07335 (KR)
(72) Inventor: KIM, Kwang-Mo, Yuseong-Gu, Daejeon 34122 (KR); JUNG, Hye-Mi, Yuseong-Gu, Daejeon 34122 (KR)
(74) Representative: Plasseraud IP
(86) International application number: PCT/KR2025/011001
(87) International publication number: WO 2026/029484

(57) **Abstract**

A battery pack according to the present disclosure includes at least one battery assembly including a plurality of battery cells; and a pack case having a housing space in which the battery assembly is housed and a pack lid covering the housing space, wherein the pack lid includes a spacer positioned between the battery assembly and the pack lid to separate the battery assembly from the pack lid.

## Description

### TECHNICAL FIELD

The present disclosure relates to a battery pack and a vehicle including the same, and more particularly, to a battery pack having an improved structure to properly control the release of flames generated from inside a battery assembly, and a vehicle including the same.

This application is based on and claims priority from Korean Patent Application No. 10-2024-0101817 filed on July 31, 2024 and Korean Patent Application No. 10-2024-0123076 filed on September 10, 2024, the disclosures of which are incorporated herein in its entirety by reference.

### BACKGROUND ART

With the growing demand for mobile electronic devices such as smartphone, tablet PCs or smartwatches and the widespread use of electric vehicles, many studies are being conducted on batteries that are mounted on them, especially secondary batteries that can be repeatedly charged and discharged.

The types of secondary batteries that are now available in the market include nickel cadmium batteries, nickel hydrogen batteries, nickel zinc batteries or lithium secondary batteries, and among them, lithium secondary batteries have little or no memory effect, and thus they are gaining more attention than nickel-based secondary batteries for their advantages that recharging can be done whenever it is convenient, the self-discharge rate is very low and energy density is high.

Lithium secondary batteries primarily use lithium-based oxides and carbon materials as positive and negative electrode active materials, respectively. Lithium secondary batteries include an electrode assembly including a positive electrode plate and a negative electrode plate coated with the positive electrode active material and the negative electrode active material, respectively and a separator positioned between the positive electrode plate and the negative electrode plate, and an outer packaging or a battery case to encase the electrode assembly together with an electrolyte solution in an airtight manner.

Lithium secondary batteries may be generally classified into can-type secondary batteries in which the electrode assembly is included in a metal can and pouch-type secondary batteries in which the electrode assembly is included in a pouch of an aluminum laminate sheet, according to the shape of the outer packaging.

Recently, secondary batteries are widely used in not only small devices such as portable electronic devices but also medium- to large-sized devices such as electric vehicles or energy storage systems (ESS) to serve as power sources and store energy. A plurality of secondary batteries may be electrically connected and housed within a module case to form a battery module. In this instance, each secondary battery included in the battery module may be referred to as a battery cell. Furthermore, a plurality of battery modules may be connected to form a battery pack.

However, the battery pack including the plurality of battery modules, each battery module including the plurality of battery cells, may be vulnerable to thermal chain reactions between the battery modules or battery cells. For example, when an event such as thermal runaway occurs in any one battery module, it is necessary to suppress the propagation of thermal runaway to other battery module or battery cell. In case where it fails to properly suppress the propagation of thermal runaway between the battery modules or battery cells, the event occurred in the specific battery module or battery cell may trigger thermal chain reactions in other battery module or battery cell, potentially causing explosions or fires, or scale up of the reactions.

In particular, when the event such as thermal runaway occurs in any one battery module, gases or flames may be randomly released into the atmosphere. In this instance, in case where it fails to properly control the release of gases or flames, the gases or flames may be directed toward other battery module, causing thermal chain reactions in the other battery module. Particularly, a module terminal may be present on the front side of the battery module, and a module busbar may be configured to establish an electrical connection to other battery module or battery pack. Accordingly, when flames are released in the frontward direction of the battery module, it may cause damage to the module terminal within the battery pack, and lead to an electrical short. Furthermore, because other battery module may be present on the front side of the battery module, when flames are released in the frontward direction of the specific battery module, the released flames may be directed toward other battery module, potentially causing fire spread between the battery modules.

In case where it fails to properly control the thermal propagation between the battery modules or battery cells, a sudden voltage drop in the battery module or battery pack may occur. This may lead to a sudden shutdown of a device including the battery module or battery pack, causing unexpected damage. For example, when the sudden voltage drop in the battery pack occurs while an electric vehicle is driving, there is not enough time to move the electric vehicle to a safe location.

Moreover, when a fire or explosion suddenly occurs due to the failure to properly control the thermal propagation between the battery modules or battery cells, there is a high risk of life damage to the user. For example, in the event of thermal runaway in the electric vehicle, when the passenger does not have a predetermined amount of time or longer before the thermal runaway develops into the fire, he/she may not be able to escape safely.

### DISCLOSURE

### Technical Problem

The present disclosure is designed to address the above-described problems, and therefore the present disclosure is directed to providing a battery pack having an improved structure to properly control the release of flames generated from inside a battery assembly, and a vehicle including the same.

The present disclosure is further directed to providing a battery pack that ensures a space between a battery assembly and a pack lid when a thermal event occurs, and a vehicle including the same.

The present disclosure is further directed to providing a battery pack that ensures a sufficient venting space when a thermal event occurs, and a vehicle including the same.

The present disclosure is further directed to providing a battery pack in which a flow of venting gas is guided when a thermal event occurs, and a vehicle including the same.

The present disclosure is further directed to providing a battery pack with improved manufacturing efficiency, and a vehicle including the same.

The technical problems to be solved by the present disclosure are not limited to the above-described problems, and these and other problems will be clearly understood by those skilled in the art from the following description.

### Technical Solution

A battery pack according to the present disclosure includes at least one battery assembly including a plurality of battery cells; and a pack case having a housing space in which the battery assembly is housed and a pack lid covering the housing space, wherein the pack lid includes a spacer positioned between the battery assembly and the pack lid to separate the battery assembly from the pack lid.

The spacer may separate the battery assembly from the pack lid to form a venting space.

The battery assembly may further include a top plate covering the plurality of battery cells, the top plate disposed on a pack lid side, and the spacer may be positioned between the top plate and the pack lid to separate the top plate from the pack lid.

The battery assembly may have at least one venting hole provided on a spacer side.

The spacer may be disposed on an inner side of the pack lid.

The pack lid may be provided to cover a top of the housing space, and the spacer may be disposed on a bottom of the pack lid.

The spacer may be integrally formed with the pack lid.

The spacer may be created by forming such that at least a part of the pack lid protrudes toward the battery assembly.

The spacer may include a material having heat resistance.

The spacer may be positioned to apply pressure to the battery assembly.

The battery assembly may include the plurality of battery cells stacked, the spacer may include a plurality of spaces, and the plurality of spaces may be arranged in a direction parallel to a stacking direction of the plurality of battery cells.

The pack case may further include a venting device to bring the housing space and an outside into communication with each other.

The spacer may include a pad disposed at an end portion on a battery assembly side, the pad having elasticity.

In the battery pack according to the present disclosure, the battery assembly may include the plurality of battery cells stacked, and the spacer may extend in a direction parallel to a stacking direction of the plurality of battery cells.

The spacer may be provided as a spacer bracket including a coupling portion that is coupled to the pack lid and a protruding portion that protrudes toward the battery assembly.

The spacer may include a plurality of spacers, and at least some of the plurality of spacers may be disposed on at least a part of each corner of the battery assembly.

A vehicle according to the present disclosure includes at least one battery pack according to the present disclosure.

### Advantageous Effects

According to the present disclosure, by the pack lid with the spacer, it may be possible to provide the battery pack having the improved structure to properly control the release of flames generated from inside the battery assembly, and the vehicle including the same.

Furthermore, by the pack lid with the spacer, it may be possible to provide the battery pack that ensures a space between the battery assembly and the pack cover when a thermal event occurs, and the vehicle including the same.

Furthermore, by the pack lid with the spacer, it may be possible to provide the battery pack that ensures a venting space when a thermal event occurs, and the vehicle including the same.

Furthermore, by the pack lid with the spacer, it may be possible to provide the battery pack in which a flow of venting gas may be guided when a thermal event occurs, and the vehicle including the same.

Furthermore, with the bracket-shaped spacer, it may be possible to provide the battery pack with improved manufacturing efficiency, and the vehicle including the same.

The effects of the present disclosure are not limited to the above-described effects, and these and other effects will be clearly understood by those skilled in the art from this specification and the accompanying drawings.

### BRIEF DESCRIPTION OF THE DRAWINGS

The accompanying drawings illustrate embodiments of the present disclosure and together with the following detailed description, serve to provide a better understanding of the technical aspects of the present disclosure, and thus the present disclosure should not be constructed as being limited to any of the drawings.
FIG. 1 is a perspective view showing an entire battery pack according to an embodiment of the present disclosure.
FIG. 2 is an exploded perspective view showing a pack lid of FIG. 1.
FIG. 3 is a perspective view showing a pack lid according to an embodiment of the present disclosure when viewed from below.
FIG. 4 is a cross-sectional perspective view of FIG. 1, taken along the line A-A'.
FIG. 5 is a side cross-sectional view of FIG. 1, taken along the line B-B', showing a flow of venting gas.
FIG. 6 is a side cross-sectional view showing swelling in a pack lid when a thermal event occurs in FIG. 5.
FIG. 7 is a perspective view showing a flow of venting gas in a battery pack, exclusive of a pack lid, according to an embodiment of the present disclosure.
FIG. 8 is a perspective view showing an entire battery assembly according to an embodiment of the present disclosure.
FIG. 9 is an exploded perspective view showing the battery assembly of FIG. 8.
FIG. 10 is an enlarged perspective view showing a battery cell of FIG. 9.
FIG. 11 is a perspective view showing a spacer further including a pad in a pack lid according to an embodiment of the present disclosure when viewed from below.
FIG. 12 is a perspective view showing a pack lid according to a variation to an embodiment of the present disclosure when viewed from below.
FIG. 13 is a perspective view showing a pack lid according to another embodiment of the present disclosure when viewed from below.
FIG. 14 is an enlarged perspective view showing a spacer bracket of FIG. 13.
FIG. 15 is a perspective view showing a pack lid according to a variation to another embodiment of the present disclosure when viewed from below.
FIG. 16 is an enlarged perspective view showing a spacer bracket of FIG. 15.
FIG. 17 is a perspective view showing a pack lid according to another variation to another embodiment of the present disclosure when viewed from below.
FIG. 18 is an enlarged perspective view showing a spacer bracket of FIG. 17.
FIG. 19 is a diagram showing a vehicle according to an embodiment of the present disclosure.

### BEST MODE

Hereinafter, embodiments of the present disclosure will be described in detail with reference to the accompanying drawings. Prior to the description, it should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are embodiments of the present disclosure to describe the technical aspects of the present disclosure and are not intended to be limiting, so it should be understood that a variety of other equivalents and modifications could be made thereto at the time the application was filed.

In addition, the present disclosure includes many different embodiments. The description of substantially identical or similar elements that are shared between each embodiment is omitted, and differences will be described to avoid redundancy.

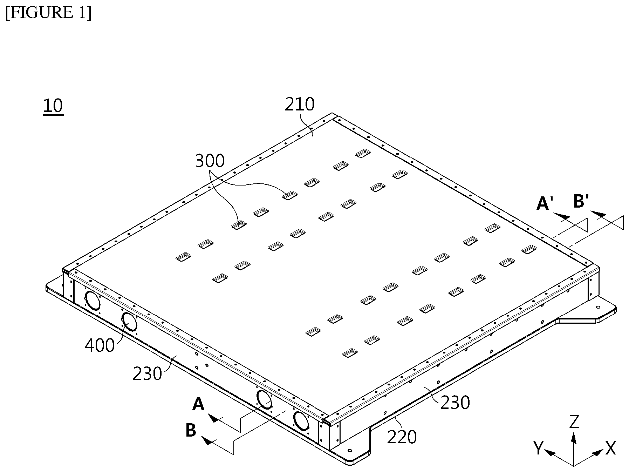

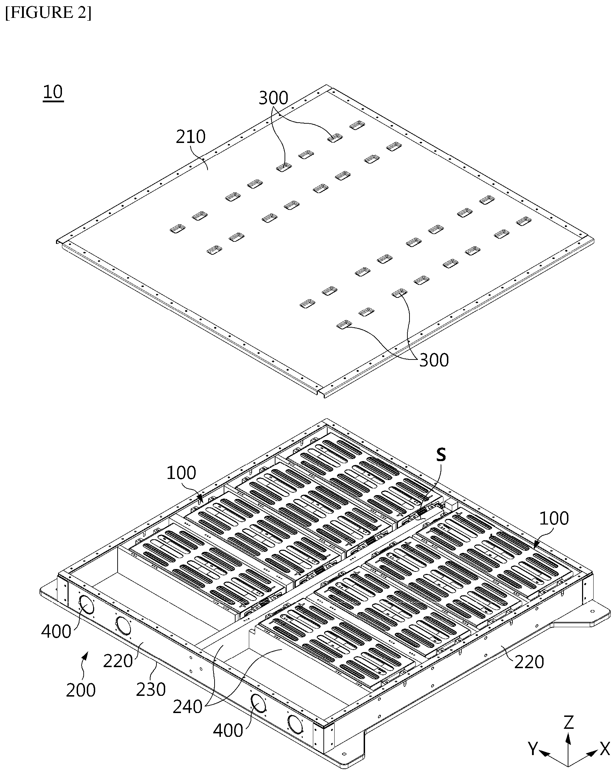

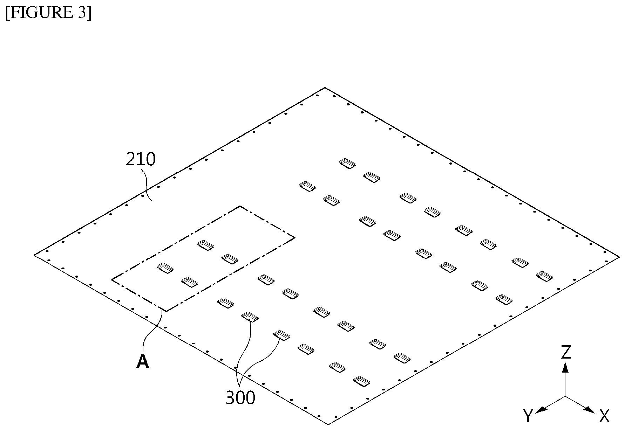

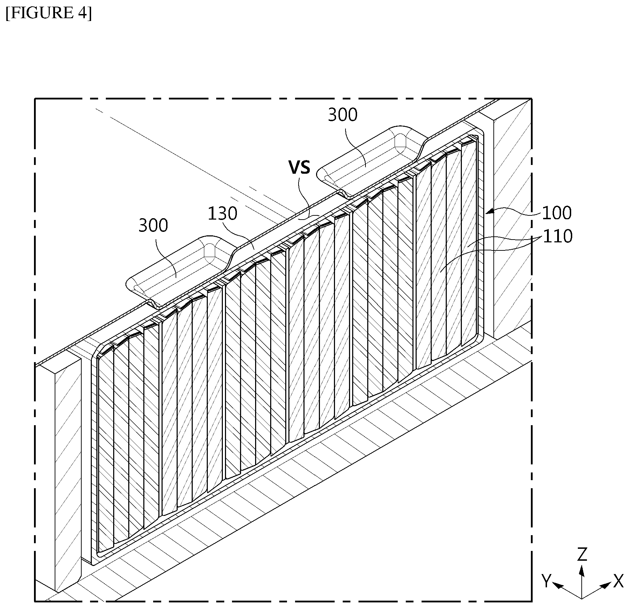

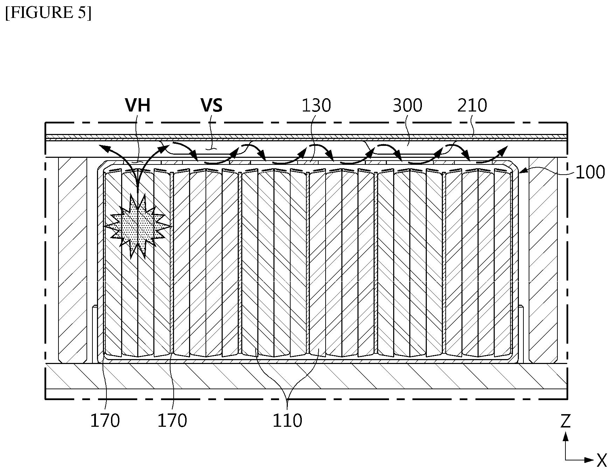

FIG. 1 is a perspective view showing an entire battery pack according to an embodiment of the present disclosure, FIG. 2 is an exploded perspective view showing a pack lid of FIG. 1, FIG. 3 is a perspective view showing the pack lid according to an embodiment of the present disclosure when viewed from below, FIG. 4 is a cross-sectional perspective view of FIG. 1, taken along the line A-A', and FIG. 5 is a side cross-sectional view of FIG. 1, taken along the line B-B', showing a flow of venting gas.

Hereinafter, the battery pack 10 according to an embodiment of the present disclosure will be described in detail with reference to FIGS. 1 to 5. The battery pack 10 according to an embodiment of the present disclosure may include at least one battery assembly 100 and a pack case 200.

The battery assembly 100 may include a plurality of battery cells 110. The battery cell 110 may be a secondary battery. The battery cell 110 may be, for example, a pouch-type battery cell 110. However, the battery cell 110 is not limited thereto, and may include a cylindrical or prismatic battery cell 110.

In the battery assembly 100, the plurality of battery cells 110 may be stacked. The plurality of battery cells 110 may be, for example, stacked along an X direction.

The pack case 200 may have a housing space S. The housing space S may accommodate at least one battery assembly 100. The housing space S may accommodate the plurality of battery assemblies 100.

The pack case 200 may include a pack lid 210. The pack lid 210 may cover the housing space S. The pack lid 210 may cover at least one battery assembly 100. The pack lid 210 may cover the plurality of battery assemblies 100.

The pack lid 210 may have a spacer 300. The spacer 300 may be positioned between the battery assembly 100 and the pack lid 210. The spacer 300 may separate the battery assembly 100 from the pack lid 210.

The spacer 300 may include a plurality of spacers. The spacers 300 may be provided corresponding to each of the plurality of battery assemblies 100. The plurality of spacers 300 may be provided for one battery assembly 100. For example, FIG. 3 shows the area 'A' corresponding to the battery assembly 100, and four spacers 300 in the area 'A'. The number of spacers 300 and their locations are not limited to those of FIG. 3. (Hereinafter, likewise, the area 'A' shown in other drawings should be understood as a part of the pack lid 210 corresponding to the battery assembly 100.)

The spacer 300 may be present in the pack lid 210 and protrude from the pack lid 210 toward the battery assembly 100. The distance between the pack lid 210 and the battery assembly 100 may be proportional to the length to which the spacer 300 protrudes. The distance between the pack lid 210 and the battery assembly 100 may be approximately similar to the length to which the spacer 300 protrudes.

In the case of existing battery packs, when a thermal event occurs in a specific battery cell due to thermal runaway, the pack case thermally deforms or melts due to high temperature. As the distance between the battery assembly and the pack lid is reduced, it is difficult to properly release flames generated from inside the battery assembly. As a result, the flames are not completely released into the atmosphere and propagate to adjacent battery cell or battery assembly, causing the thermal runaway and thermal propagation to spread faster.

However, the battery pack 10 according to the present disclosure includes the pack lid 210 with the spacer 300 to maintain the distance between the battery assembly 100 and the pack lid 210 when the thermal event occurs in the battery pack 10. As a result, the battery pack 10 according to the present disclosure may have an improved structure to properly control the release of flames generated from inside the battery assembly 100.

Meanwhile, the pack case 200 may include a bottom portion 230 and a sidewall portion 220. The bottom portion 230 may form the bottom of the pack case 200. The sidewall portion 220 may surround the bottom portion 230. By the bottom portion 230 and the sidewall portion 220, the housing space S may be formed inside the pack case 200. The pack case 200 may further include a partition frame 240. The partition frame 240 may run across the housing space S and partition the housing space S. Meanwhile, the pack case 200 may further include a venting device 400, and the venting device 400 will be described in detail below.

The spacer 300 may separate the battery assembly 100 from the pack lid 210 to form a venting space VS. When the thermal event occurs in any battery cell 110 of the battery assembly 100, high-temperature flames, gases and solids (hereinafter referred to collectively as "venting gas VG") may be ejected from the battery cell 110. The venting space VS may be understood as a space in which the venting gas VG flows.

In the case of existing battery packs, by the high-temperature venting gas, the pack case may thermally deform or melt, resulting in the narrowed or blocked venting space when the thermal event occurs.

However, in the battery pack 10 according to the present disclosure, by the spacer 300, the sufficient venting space VS in which the venting gas VG flows may be formed, and when the thermal event occurs, the venting space VS avoids narrowing and may be maintained, thereby releasing the venting gas VG quickly. As a result, the venting gas VG may be completely released into the atmosphere, thereby preventing the venting gas VG from propagating to the adjacent battery cell 110 or battery assembly 100, and preventing the thermal runaway and thermal propagation from spreading fast.

The battery assembly 100 may further include a top plate 130. The top plate 130 may cover the plurality of battery cells 110 of the battery assembly 100. The top plate 130 may be disposed on the pack lid 210 side of the battery assembly 100. That is, the top plate 130 may be disposed at a location adjacent to the pack lid 210 in the battery assembly 100. The top plate 130 may be, for example, disposed on the upper side or +Z direction side of the battery assembly 100.

The spacer 300 may separate the top plate 130 from the pack lid 210. By the spacer 300, the venting space VS may be formed between the top plate 130 and the pack lid 210.

In the battery pack 10 as described above, the space may be formed by the spacer 300 between the top plate 130 covering the plurality of battery cells 110 of the battery assembly 100 and the pack lid 210 to separate them, thereby separating the plurality of battery cells 110 from the pack lid 210 more effectively.

The battery assembly 100 may have at least one venting hole VH. The venting hole VH may be a hole through which the venting gas VG may pass. The venting hole VH may be disposed on the spacer 300 side of the battery assembly 100. The venting hole VH may include a plurality of venting holes. The venting hole VH may be present in the top plate 130. The venting hole VH may be in communication with the space between the battery assembly 100 and the pack lid 210 separated by the spacer 300. The venting hole VH may be in communication with the venting space VS.

When the battery assembly 100 has the venting hole VH as described above, the venting gas VG may be forced into the space between the battery assembly 100 and the pack lid 210 or the venting space VS through the venting hole VH. Accordingly, when the thermal event occurs, the venting gas VG generated from the battery cell 110 may be released more quickly.

Meanwhile, in the case of the plurality of venting holes VH, the plurality of venting holes VH may be spaced apart from each other. The spacer 300 may be positioned between the venting holes VH spaced apart from each other. The spacer 300 may be positioned to avoid interference with the venting holes VH. For example, when viewed from a direction toward the battery assembly 100 from the pack lid 210, the spacer 300 may be disposed at a location that does not overlap the venting holes VH.

The spacer 300 may be present on the inner side of the pack lid 210. Here, the inner side may be understood as a portion of the pack lid 210 that faces or contacts the battery assembly 100.

As described above, when the spacer 300 is present on the inner side of the pack lid 210, the inner side of the pack lid 210 and the battery assembly 100 may be spaced apart from each other, thereby separating the pack lid 210 from the battery assembly 100 more effectively.

The pack lid 210 may be provided to cover the top of the housing space S. The pack lid 210 may be, for example, provided to cover +Z direction side of the housing space S. In this case, the pack lid 210 may cover the top of the battery assembly 100. The spacer 300 may be present on the lower surface of the pack lid 210. For example, the spacer 300 may be present on -Z direction side of the pack lid 210. The spacer 300 may be disposed on the lower surface of the pack lid 210, facing the battery assembly 100. The spacer 300 may protrude from the lower surface of the pack lid 210 toward the battery assembly 100 in the downward direction or -Z direction.

In the above-described configuration, the battery assembly 100 and the pack lid 210 may be spaced apart from each other on or above the battery assembly 100, and the venting space VS may be formed between the upper side of the battery assembly 100 and the lower side of the pack lid 210. Accordingly, so-called upward venting may be effectively achieved.

The spacer 300 may be integrally formed with the pack lid 210. The spacer 300 may protrude in a direction toward the battery assembly 100 from the pack lid 210, and be integrally formed with the pack lid 210. In this case, the spacer 300 and the pack lid 210 may be manufactured at one time.

As described above, when the spacer 300 is integrally formed with the pack lid 210, the manufacturing efficiency of the spacer 300 and the pack lid 210 may be improved, and the spacer 300 may be secured to the pack lid 210 more firmly.

The spacer 300 may be formed in a forming shape. Specifically, the spacer 300 may allow at least a part of the pack lid 210 to protrude toward the battery assembly 100. In addition, a portion of the spacer 300 opposite the battery assembly 100 may be recessed from the pack lid 210.

As described above, when the spacer 300 is formed in a forming shape, the spacer 300 and the pack lid 210 may be manufactured by pressing a single thin plate, thereby further improving the manufacturing efficiency of the spacer 300 and the pack lid 210 and reducing the weight of the pack lid 210.

The spacer 300 may include a heat-resistant material. For example, the spacer 300 may include a metal having high resistance to high temperature. For example, the spacer 300 may include stainless use steel (SUS). The spacer 300 may be made of the same material as the pack lid 210.

As described above, when the spacer 300 includes the heat-resistant material, it may be possible to effectively prevent deformation of the spacer 300 from high temperature.

The spacer 300 may be positioned to apply pressure to the battery assembly 100. The spacer 300 may apply pressure to the battery assembly 100 while in contact with the battery assembly 100.

When the spacer 300 is positioned as described above, the spacer 300 may closely contact the battery assembly 100, thereby reducing the assembly tolerance of the battery pack 10. In addition, when external impacts or vibrations are applied, the pack lid 210 may be maintained more firmly.

In the battery assembly 100, the plurality of battery cells 110 may be stacked. For example, the plurality of battery cells 110 may be stacked along the X-axis direction. The spacer 300 may include a plurality of spacers. The plurality of spacers 300 may be arranged in a direction parallel to the stacking direction of the plurality of battery cells 110. That is, the plurality of spacers 300 may form a row in the stacking direction of the battery cells 110. Along the row direction of the plurality of spacers 300, two adjacent spacers 300 may be spaced apart from each other. For example, as shown in the area 'A' of FIG. 3, in one battery assembly 100, two spacers 300 may be arranged in a row along the X direction, spaced apart from each other.

When the plurality of spacers 300 are arranged as described above, there is an advantage that the space between the pack lid 210 and the battery assembly 100 or the venting space VS may be expanded. In addition, because the plurality of spacers 300 form a row, there is an advantage that the venting gas VG from the battery cell 110 may be guided in the row direction of the plurality of spacers 300.

Meanwhile, the battery assembly 100 may further include at least one barrier 170. The barrier 170 may be disposed outside of the stacked battery cells 110 or between the stacked battery cells 110.

The barrier 170 may be, for example, provided every four battery cells 110.

The barrier 170 may be, for example, provided with a function of absorbing swelling in the battery cell 110.

The barrier 170 may be, for example, provided with a function of blocking high-temperature heat or flames.

The barrier 170 may be, for example, provided with a function of cooling the battery cell 110.

The barrier 170 may have any other functions. The barrier 170 may have different functions at the same time.

When the barrier 170 includes a plurality of barriers, one barrier 170 and other barrier 170 may have different functions. For example, the barrier 170 may be positioned on the outermost side of the stacked battery assembly 100 to provide the function of absorbing swelling in the battery cell 110, and the barrier 170 positioned between the battery cells 110 may have the function of cooling the battery cells 110 or the function of blocking high-temperature heat or flames.

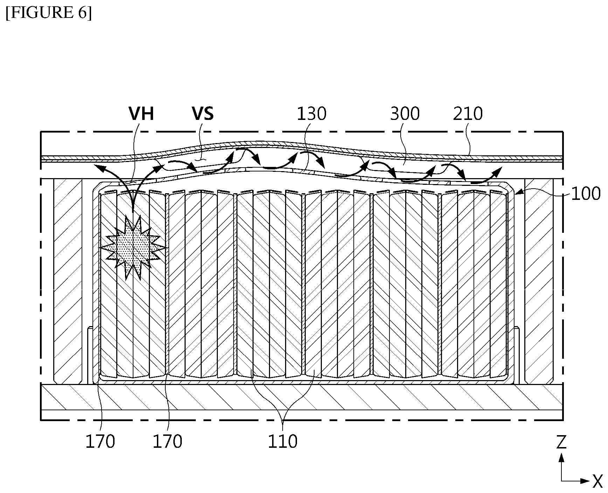

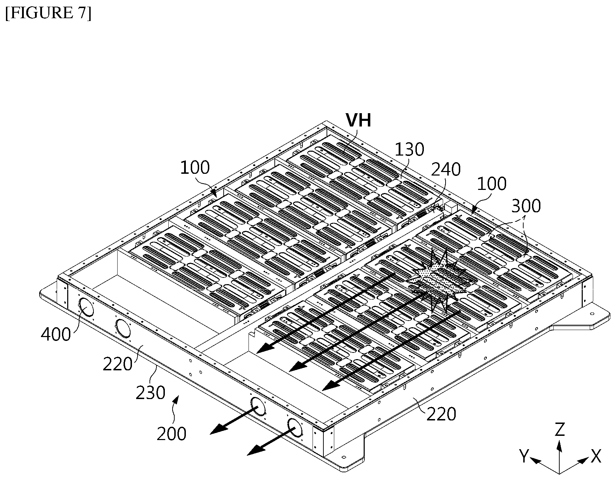

FIG. 6 is a side cross-sectional view showing swelling in the pack lid when the thermal event occurs in FIG. 5, and FIG. 7 is a perspective view showing the flow of venting gas in the battery pack, exclusive of the pack lid, according to an embodiment of the present disclosure.

Referring to FIGS. 6 and 7, when the venting gas VG is ejected from the battery cell 110 due to the thermal event in the battery cell 110, it can be seen that the pack lid 210 swells and deforms. Specifically, when the venting gas VG is ejected from the battery cell 110, the top plate 130 of the battery assembly 100 may be deformed by high temperature and high pressure of the venting gas VG, and when the top plate 130 is deformed, pressure may be applied to the pack lid 210 that in turn, may be deformed.

In the case of existing battery packs, when the top plate is deformed, the deformed top plate may swell up to the pack lid or attach to the pack lid, causing the space between the top plate and the pack lid to narrow, which slows down the flow of venting gas.

However, the battery pack 10 according to the present disclosure may maintain the distance between the top plate 130 and the pack lid 210 by the spacer 300 when the top plate 130 is deformed, thereby effectively maintaining the space between the top plate 130 and the pack lid 210 or the venting space VS, and allowing the venting gas VG to flow quickly. In addition, the venting gas VG ejected from the battery assembly 100 toward the pack lid 210 may be released out of the pack case 200 quickly.

Referring to FIGS. 1, 2 and 7, the pack case 200 may further include the venting device 400. The venting device 400 may bring the housing space S inside the pack case 200 and the outside of the pack case 200 into communication with each other. Through the venting device 400, the space between the battery assembly 100 and the pack lid 210 or the venting space VS and the outside may be in communication with each other.

The venting device 400 may be simply provided in a shape of a hole. Alternatively, the venting device 400 may be configured to open only when a predetermined temperature or internal pressure is formed, in order to bring the housing space S and the outside of the pack case 200 into communication with each other.

When the thermal event occurs in the battery pack 10, the venting gas VG from the battery cell 110 or the battery assembly 100 may be effectively released into the atmosphere through the venting device 400 via the venting space VS.

Meanwhile, as previously mentioned, the pack case 200 may further include the partition frame 240. The partition frame 240 may include a plurality of partition frames. Some of the plurality of partition frames 240 may be provided with a different height from the others.

Among the plurality of partition frames 240, the partition frame 240 having larger height may closely contact the pack lid 210, and the partition frame 240 having smaller height may be spaced apart from the pack lid 210. For example, the partition frame 240 extending in the X direction may have larger height than the partition frame 240 extending in a Y direction, and closely contact the pack lid 210.

When the partition frame 240 is provided as described above, the venting gas VG from the battery cell 110 or the battery assembly 100 may be released into the atmosphere via other battery assembly 100 through the space between the partition frame 240 of smaller height and the pack lid 210. Because the venting gas VG cannot pass through the partition frame 240 of larger height, it may be possible to prevent the venting gas VG from spreading throughout the entire pack case 200.

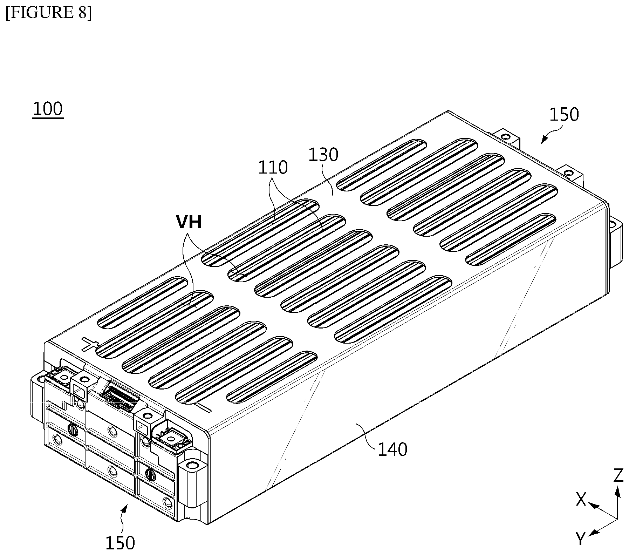

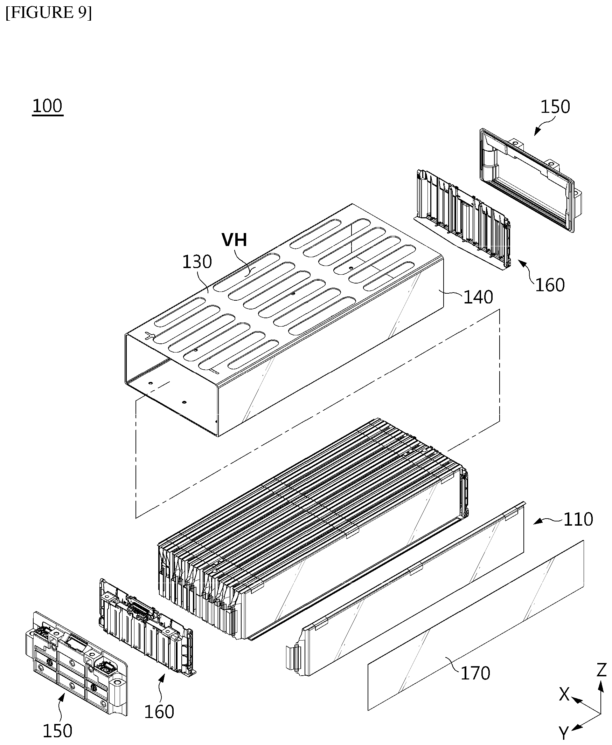

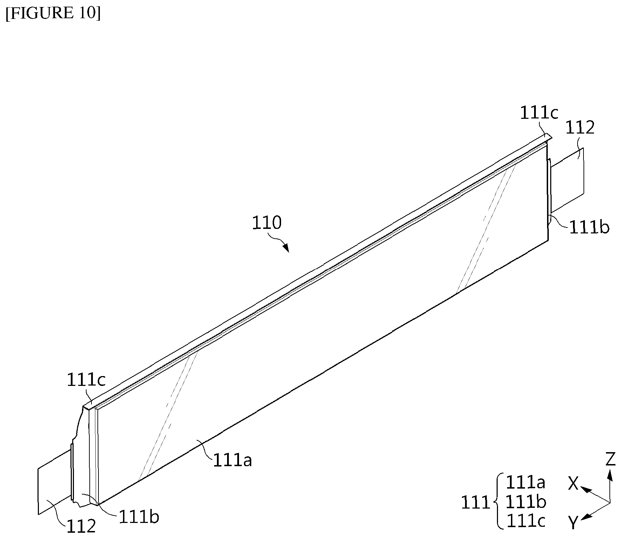

FIG. 8 is a perspective view showing the entire battery assembly according to an embodiment of the present disclosure, FIG. 9 is an exploded perspective view showing the battery assembly of FIG. 8, and FIG. 10 is an enlarged perspective view showing the battery cell of FIG. 9.

Hereinafter, the battery assembly 100 and the battery cell 110 according to an embodiment of the present disclosure will be described in more detail with reference to FIGS. 8 to 10.

The battery assembly 100 may have a predetermined width, length and height in the X-, Y- and Z-axis directions, respectively.

The battery assembly 100 may include an assembly housing 120. The assembly housing 120 may accommodate the plurality of battery cells 110 stacked. The assembly housing 120 may form the overall shape of the battery assembly 100.

The assembly housing 120 may include the top plate 130 described above. The assembly housing 120 may further include a cover frame 140 and an end cover. The cover frame 140 may cover the lower side or -Z direction side of the plurality of battery cells 110 and the left and right sides or two sides in the X direction.

The cover frame 140 may be provided in a shape of 'U' in cross section. Accordingly, the upper side or +Z direction side of the cover frame 140 may be open, and the top plate 130 may be disposed in the open portion of the cover frame 140.

The end cover 150 may cover the front and rear sides of the plurality of battery cells 110 or two sides in the Y direction. In the battery assembly 100, the left and right sides and the lower side of the plurality of battery cells 110 may be closed by the cover frame 140, the front and rear sides may be closed by the end cover 150, and the upper side may be open by the top plate 130 having the venting hole VH. As a result, when the venting gas VG is ejected from the battery assembly 100, the flow of venting gas VG may be guided to the upper side of the battery assembly 100.

A busbar frame assembly 160 may be positioned between the plurality of battery cells 110 and the end cover 150. The busbar frame assembly 160 may be electrically connected to an electrode lead 112 of each of the plurality of battery cells 110 as described below.

A top cover 180 may be positioned between the plurality of battery cells 110 and the top plate 130. When the venting gas VG is ejected due to the thermal event in the battery cell 110, the venting gas VG may flow to the pack lid 210 through the top cover 180. The top cover 180 may block the flow of venting gas VG to other battery cell 110 where the thermal event has not occurred.

The battery cell 110 of the battery assembly 100 according to an embodiment of the present disclosure may include a cell case 111 and the electrode lead 112.

The battery cell 110 while standing within the battery assembly 100 in the vertical direction or Z-axis direction may be stacked along the width direction or X-axis direction of the battery assembly 100.

The cell case 111 may accommodate the electrode assembly including a stack of a positive electrode, a negative electrode and a separator. The cell case 111 may include a housing portion 111a, a sealing portion 111b and a folding portion 111c.

The electrode assembly may be housed in the housing portion 111a.

The sealing portion 111b may be where at least a part of the edge of the housing portion 111a is sealed.

The folding portion 111c may be where a part of the sealing portion 111b is folded.

The electrode lead 112 may be electrically connected to the electrode assembly and protrude toward two sides of the battery cell 110. For example, the electrode leads 112 may protrude toward the two sides of the battery cell 110 in the Y-axis direction.

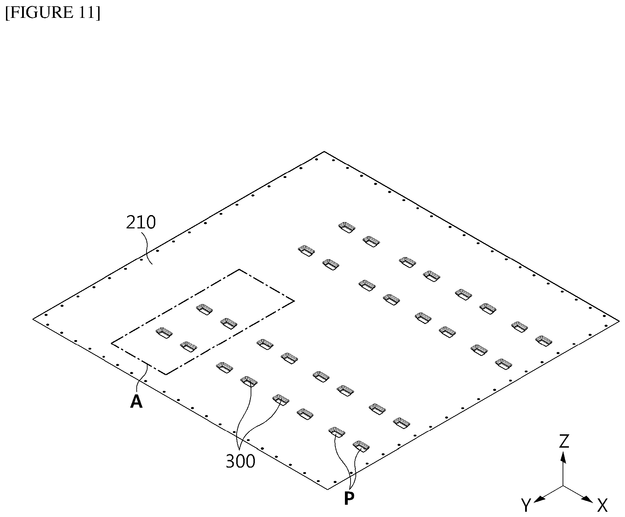

FIG. 11 is a perspective view showing the spacer with a pad in the pack lid according to an embodiment of the present disclosure when viewed from below.

Referring to FIG. 11, in the pack lid 210 according to an embodiment of the present disclosure, the pad P may be added to the spacer 300. The pad P may be disposed at an end portion of the spacer 300 on the battery assembly 100 side.

The pad P may be, for example, disposed on the lower side or the -Z direction side end portion of the spacer 300. The pad P may have elasticity. For example, the pad P may include at least one material of silicone, urethane or polyurethane. The pad P may be fixedly disposed on the spacer 300. The pad P may be positioned between the spacer 300 and the battery assembly 100. The pad P may be compressed between the spacer 300 and the battery assembly 100.

As described above, when the pad P is added to the spacer 300, the assembly tolerance of the battery pack 10 may be further reduced. In addition, external impacts or vibrations may be effectively mitigated.

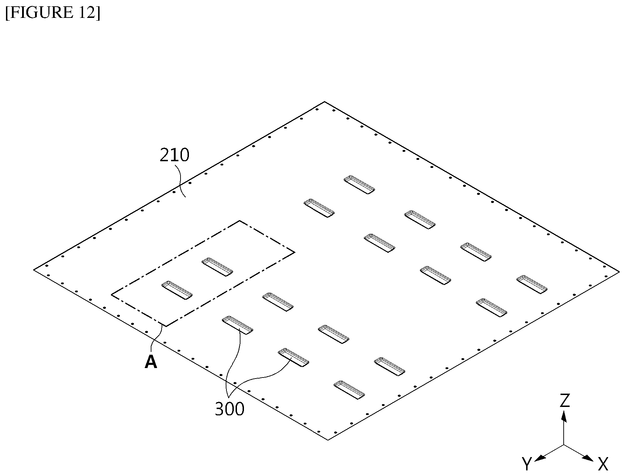

FIG. 12 is a perspective view showing the pack lid according to a variation to an embodiment of the present disclosure when viewed from below.

Referring to FIG. 12, the spacer 300 may be formed in an elongated shape. Specifically, the spacer 300 may extend in the direction parallel to the stacking direction of the plurality of battery cells 110. For example, the spacer 300 may extend along the X direction. In this case, for example, as shown in the area 'A' of FIG. 12, the spacer 300 may extend across the battery assembly 100 along the X direction.

When the spacer 300 is provided as described above, there is an advantage that the flow of venting gas VG may be guided more effectively.

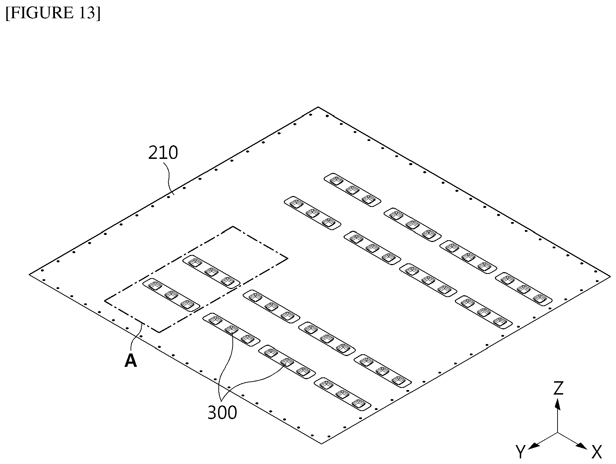

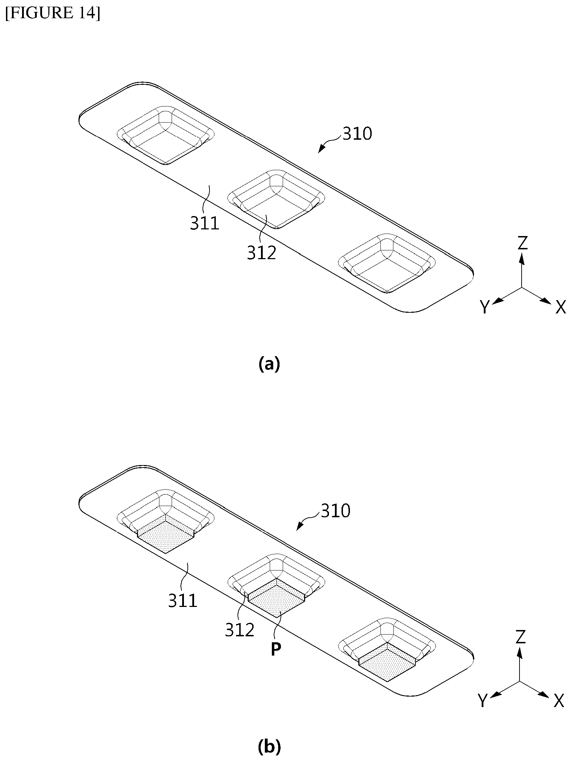

FIG. 13 is a perspective view showing the pack lid according to another embodiment of the present disclosure when viewed from below, and FIG. 14 is an enlarged perspective view showing a spacer bracket of FIG. 13.

Hereinafter, the spacer 300 of the pack lid 210 according to another embodiment of the present disclosure will be described in detail with reference to FIGS. 13 and 14. In the pack lid 210 according to another embodiment of the present disclosure, the spacer 300 may be provided as the spacer bracket 310. That is, the spacer 300 may be provided in a shape of a bracket.

The spacer 300 shown in FIG. 13 may be provided as the spacer bracket 310 shown in (a) of FIG. 14. In particular, referring to (a) of FIG. 14, the spacer bracket 310 may have a coupling portion 311 and a protruding portion 312.

The coupling portion 311 may be a portion that is coupled to the pack lid 210. The coupling portion 311 may be coupled to the pack lid 210 while in contact with the pack lid 210. For example, the upper surface of the coupling portion 311 may be coupled to the lower surface of the pack lid 210. The coupling portion 311 may be coupled to the pack lid 210 in various ways. For example, the coupling portion 311 may be coupled to the pack lid 210 by adhesion. However, the method for coupling of the coupling portion 311 and the pack lid 210 is not limited thereto.

The protruding portion 312 may be a portion that protrudes toward the battery assembly 100. The protruding portion 312 may be provided in a forming shape from the coupling portion 311. One spacer bracket 310 may have a plurality of protruding portions 312. For example, as shown in (a) of FIG. 14, one spacer bracket 310 may have three protruding portions 312.

Each protruding portion 312 may have the same shape. Each protruding portion 312 may be spaced apart from each other. Each protruding portion 312 may contact the battery assembly 100 or the top plate 130 of the battery assembly 100.

As described above, when the spacer 300 is provided as the spacer bracket 310, there is an advantage that the spacer 300 may be easily incorporated into the pack lid 210. For example, the spacer 300 may be easily incorporated into the pack lid 210 only by coupling the spacer bracket 310 to the pack lid 210 with no spacer 300.

Additionally, when the spacer 300 is provided as the spacer bracket 310, any modification may be made to the spacer 300 in location and number, thereby improving the design scalability and deformability of the pack lid 210 with the spacer 300.

Meanwhile, referring to (b) of FIG. 14, the pad P may be added to the spacer bracket 310. The pad P may be made of the same material as the pad P added to the spacer 300 according to an embodiment of the present disclosure as described together with FIG. 11.

The pad P may be disposed at an end portion of the protruding portion 312. For example, the pad P may be disposed at the lower end portion or -Z side end portion of the protruding portion 312. The pad P may be fixedly disposed on the protruding portion 312. The pad P may be positioned between the protruding portion 312 and the battery assembly 100. The pad P may be compressed between the protruding portion 312 and the battery assembly 100.

As described above, when the pad P is added to the spacer bracket 310 or the protruding portion 312, the assembly tolerance of the battery pack 10 may be further reduced. In addition, external impacts or vibrations may be effectively mitigated.

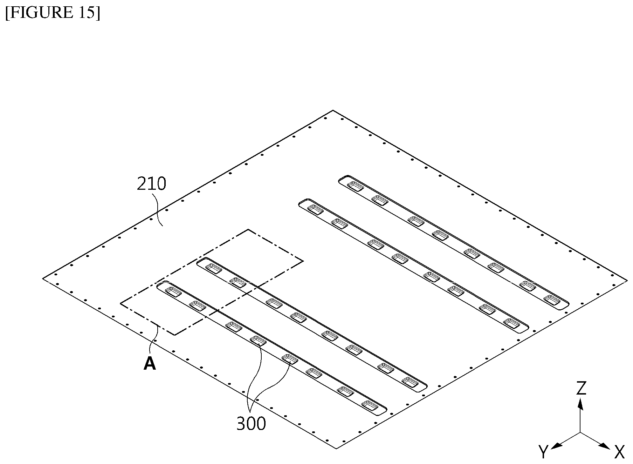

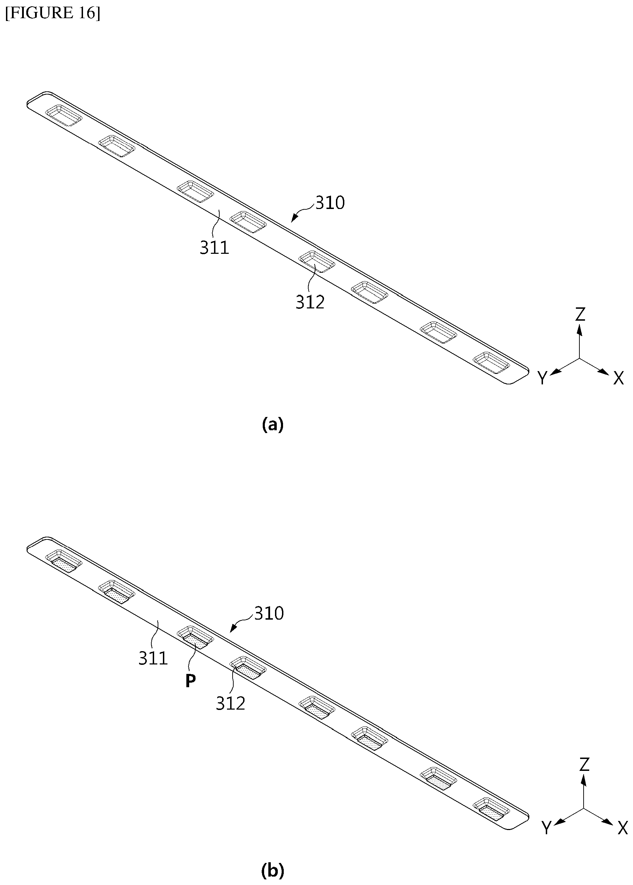

FIG. 15 is a perspective view showing the pack lid according to a variation to another embodiment of the present disclosure when viewed from below, and FIG. 16 is an enlarged perspective view showing the spacer bracket of FIG. 15.

Hereinafter, the spacer 300 of the pack lid 210 according to the variation to another embodiment of the present disclosure will be described in detail with reference to FIGS. 15 and 16. The spacer 300 according to the variation to another embodiment of the present disclosure may be formed in an elongated shape. Specifically, the spacer 300 shown in FIG. 15 may be provided as the elongated spacer bracket 310 as shown in (a) of FIG. 16.

The spacer bracket 310 may extend in the direction parallel to the stacking direction of the plurality of battery cells 110. For example, the spacer bracket 310 may extend across the battery assembly 100 along the X direction.

The spacer bracket 310 according to the variation to another embodiment of the present disclosure may include the coupling portion 311 and the protruding portion 312 in the same way as the spacer bracket 310 described in another embodiment of the present disclosure. The coupling portion 311 may be formed in an elongated shape. The coupling portion 311 may be disposed such that the plurality of protruding portions 312 form a row along the length direction of the coupling portion 311.

When the spacer bracket 310 is provided as described above, the productivity of the pack lid 210 with the spacer 300 may be improved. For example, as a larger number of protruding portions 312 may be placed on the coupling portion 311, the number of coupling portions 311 relative to the number of protruding portions 312 may be reduced, thereby reducing the cost and time required to perform the process of coupling the spacer bracket 310 to the pack lid 210.

Meanwhile, referring to (b) of FIG. 16, in the same way as the spacer bracket 310 according to another embodiment of the present disclosure as shown in (b) of FIG. 14, the pad P may be added to the spacer bracket 310 according to the variation to another embodiment of the present disclosure. For details of the spacer bracket 310 according to the variation to another embodiment of the present disclosure, reference is made to the description of the pad P disposed on the spacer bracket 310 according to another embodiment of the present disclosure as shown in (b) of FIG. 14 and as described above.

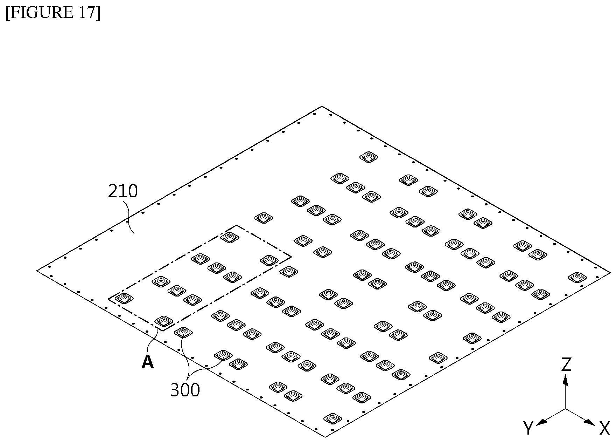

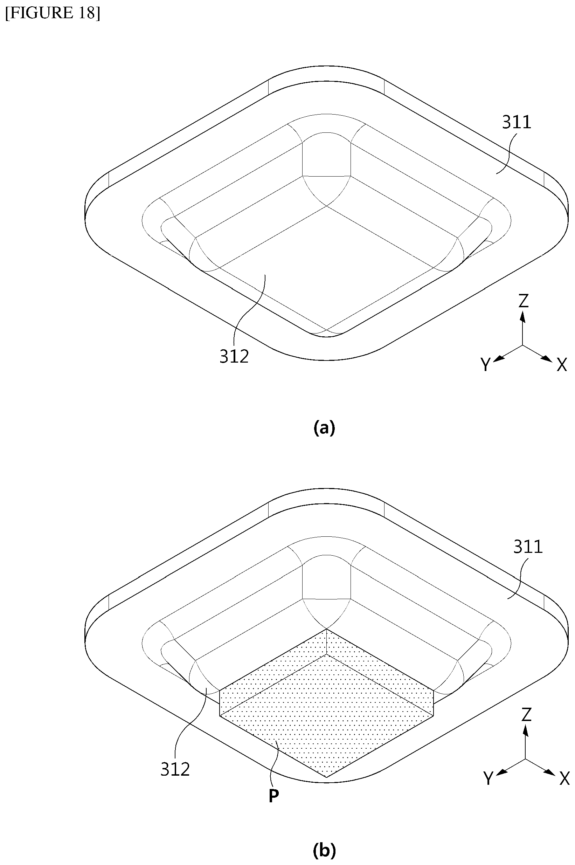

FIG. 17 is a perspective view showing the pack lid according to another variation to another embodiment of the present disclosure when viewed from below, and FIG. 18 is an enlarged perspective view showing the spacer bracket of FIG. 17.

Hereinafter, the spacer 300 of the pack lid 210 according to another variation to another embodiment of the present disclosure will be described in detail with reference to FIGS. 17 and 18. The spacer 300 according to another variation to another embodiment of the present disclosure may be provided as the spacer bracket 310, but may be formed in a non-elongated shape. Specifically, the spacer 300 shown in FIG. 17 may be provided as the spacer bracket 310 formed in the non-elongated shape as shown in (a) of FIG. 18.

The spacer bracket 310 according to another variation to another embodiment of the present disclosure may include the coupling portion 311 and the protruding portion 312 in a one-to-one correspondence relationship, each one protruding portion 312 for each coupling portion 311.

When the spacer bracket 310 is provided as described above, there is an advantage that the spacer 300 provided as the spacer bracket 310 may be disposed at a desired location in the space between the pack lid 210 and the battery assembly 100.

Meanwhile, referring to (b) of FIG. 18, in the same way as the spacer bracket 310 according to another embodiment of the present disclosure as shown in (b) of FIG. 14, the pad P may be added to the spacer bracket 310 according to the variation to another embodiment of the present disclosure. For details of the spacer bracket 310 according to another variation to another embodiment of the present disclosure, reference is made to the description of the pad P disposed on the spacer bracket 310 according to another embodiment of the present disclosure as shown in (b) of FIG. 14 and as described above.

The spacer 300 may include a plurality of spacers, and at least some of the plurality of spacers 300 may be disposed on at least a part of each corner of the battery assembly 100.

For example, as shown in the area A of FIG. 17, some of the plurality of spacers 300 disposed in the area of the pack lid 210 corresponding to the battery assembly 100 may be each disposed at each of four corners of the area A. In this instance, the spacer 300 may be provided as the spacer bracket 310 as shown in FIGS. 17 and 18, but this is for illustrative purposes only, and like the spacer 300 of the pack lid 210 according to an embodiment of the present disclosure, the spacer 300 may be provided in a forming shape.

When the spacer 300 is provided as described above, each corner of the battery assembly 100 may be evenly supported, and there is an advantage that the battery assembly 100 and the pack lid 210 may be positioned stably and firmly.

The above description presents examples of the battery pack 10 according to the present disclosure. The technical aspects of the present disclosure are not limited to these examples, and may include a combination of any two or more thereof.

Although not shown, the battery pack 10 according to the present disclosure may further include a variety of devices to control the charge and discharge of the battery cells 110, for example, a Battery Management System (BMS), a current sensor or a fuse.

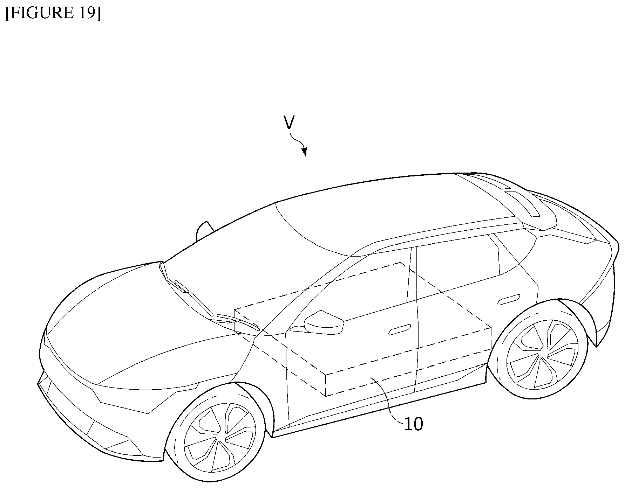

FIG. 19 is a diagram showing a vehicle according to an embodiment of the present disclosure.

Hereinafter, referring to FIG. 19, the battery pack 10 according to the present disclosure may be applied to the vehicle V such as an electric vehicle or a hybrid electric vehicle. That is, the vehicle V according to the present disclosure may include the battery pack 10 according to the present disclosure. The battery pack 10 may be installed in a vehicle body frame under a vehicle seat or a trunk space. In addition to the battery pack 10, the vehicle V according to an embodiment of the present disclosure may further include any other component included in the vehicle. For example, in addition to the battery pack 10 according to an embodiment of the present disclosure, the vehicle V according to an embodiment of the present disclosure may further include a vehicle body, a motor or a controller such as an electronic control unit (ECU).

In addition to the vehicle V, the battery pack 10 according to an embodiment of the present disclosure may be used in any other device, apparatus and machine using secondary batteries, for example, energy storage systems.

Although the embodiments of the present disclosure have been hereinabove described with reference to the accompanying drawings, it is obvious to persons having ordinary skill in the technical field pertaining to the present disclosure that a variety of modifications and change may be made thereto without departing from the scope of the present disclosure. Therefore, the scope of the present disclosure should be interpreted by the appended claims described to include such variations.

### [List of Reference Numerals]

10: Battery pack
100: Battery assembly
110: Battery cell
111: Cell case
111a : Housing portion
111b : Sealing portion
111c : Folding portion
112: Electrode lead
120: Assembly housing
130: Top plate
140: Cover frame
150 : End cover
160 : Busbar frame assembly
170 : Barrier
180: Top cover
200: Pack case
210: Pack lid
220 : Sidewall portion
230 : Bottom portion
240: Partition frame
300: Spacer
310 : Spacer bracket
311: Coupling portion
312: Protruding portion
400 : Venting device
S: Housing space
VG: Venting gas
VH: Venting hole
VS: Venting space
P: Pad
V: Vehicle

## Claims

1. A battery pack comprising:
at least one battery assembly including a plurality of battery cells; and
a pack case having a housing space in which the battery assembly is housed, and a pack lid covering the housing space,
wherein the pack lid includes:
a spacer positioned between the battery assembly and the pack lid to separate the battery assembly from the pack lid.

2. The battery pack according to claim 1,
wherein the spacer separates the battery assembly from the pack lid to form a venting space.

3. The battery pack according to claim 1,
wherein the battery assembly further includes:
a top plate covering the plurality of battery cells, the top plate disposed on a pack lid side, and
wherein the spacer is positioned between the top plate and the pack lid to separate the top plate from the pack lid.

4. The battery pack according to claim 1,
wherein the battery assembly has at least one venting hole provided on a spacer side.

5. The battery pack according to claim 1,
wherein the spacer is disposed on an inner side of the pack lid.

6. The battery pack according to claim 1,
wherein the pack lid is provided to cover a top of the housing space, and
wherein the spacer is disposed on a bottom of the pack lid.

7. The battery pack according to claim 1,
wherein the spacer is integrally formed with the pack lid.

8. The battery pack according to claim 7,
wherein the spacer is formed in a forming shape such that at least a part of the pack lid protrudes toward the battery assembly.

9. The battery pack according to claim 1,
wherein the spacer includes a material having heat resistance.

10. The battery pack according to claim 1,
wherein the spacer is positioned to apply pressure to the battery assembly.

11. The battery pack according to claim 1,
wherein the battery assembly includes the plurality of battery cells stacked, and
wherein the spacer includes a plurality of spaces, and the plurality of spaces are arranged in a direction parallel to a stacking direction of the plurality of battery cells.

12. The battery pack according to claim 1,
wherein the pack case further includes:
a venting device to bring the housing space and an outside into communication with each other.

13. The battery pack according to claim 1,
wherein the spacer further includes:
a pad disposed at an end portion on a battery assembly side, the pad having elasticity.

14. The battery pack according to claim 1,
wherein the battery assembly includes the plurality of battery cells stacked, and
wherein the spacer extends in a direction parallel to a stacking direction of the plurality of battery cells.

15. The battery pack according to claim 1,
wherein the spacer is provided as a spacer bracket including a coupling portion that is coupled to the pack lid and a protruding portion that protrudes toward the battery assembly.

16. The battery pack according to claim 1,
wherein the spacer includes a plurality of spacers, and
wherein at least some of the plurality of spacers are disposed on at least a part of each corner of the battery assembly.

17. A vehicle comprising at least one battery pack according to any one of claims 1 to 16.
